(19) Europäisches Patentamt / European Patent Office / Office européen des brevets

(11) **EP 1 063 827 B1**

(12) **EUROPEAN PATENT SPECIFICATION**

(45) Date of publication and mention of the grant of the patent:
**03.01.2007 Bulletin 2007/01**

(51) Int Cl.:
***G06F 17/30*** (2006.01)  ***H04L 12/56*** (2006.01)

(21) Application number: **00102197.1**

(22) Date of filing: **09.02.2000**

(54) **Method for address lookup**

Verfahren zum Aufsuchen von Addressen

Méthode pour la recherche des addresses

(84) Designated Contracting States:
**DE FI FR GB**

(30) Priority: **11.05.1999 US 309270**

(43) Date of publication of application:
**27.12.2000 Bulletin 2000/52**

(73) Proprietor: **NEC CORPORATION**
**Tokyo (JP)**

(72) Inventor: **Goudreau, Mark**
**Princeton,**
**New Jersey 08540 (US)**

(74) Representative: **Vossius & Partner**
**Siebertstrasse 4**
**81675 München (DE)**

(56) References cited:
**US-A- 5 787 430**

• **WALDVOGEL M ET AL: "SCALABLE HIGH SPEED IP ROUTING LOOKUPS" COMPUTER COMMUNICATION REVIEW, ASSOCIATION FOR COMPUTING MACHINERY. NEW YORK, US, 14 September 1997 (1997-09-14), pages 25-36, XP002175386 ISSN: 0146-4833**
• **DOERINGER W ET AL: "ROUTING ON LONGEST-MATCHING PREFIXES" IEEE / ACM TRANSACTIONS ON NETWORKING, IEEE INC. NEW YORK, US, vol. 4, no. 1, February 1996 (1996-02), pages 86-96, XP000553772 ISSN: 1063-6692**
• **SHISHIBORI M ET AL: "DESIGN OF A COMPACT DATA STRUCTURE FOR THE PATRICIA TRIE" IEICE TRANSACTIONS ON INFORMATION AND SYSTEMS, INSTITUTE OF ELECTRONICS INFORMATION AND COMM. ENG. TOKYO, JP, vol. E81, no. 4, April 1998 (1998-04), pages 364-371, XP000753488 ISSN: 0916-8532**
• **GUPTA P ET AL: "Routing lookups in hardware at memory access speeds" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA, IEEE, US, vol. 3, 29 March 1998 (1998-03-29), pages 1240-1247, XP010270370 ISBN: 0-7803-4383-2**

**Description**

**IA. Field of the invention**

This invention relates to storing prefixes related to addresses efficiently. Specifically, this invention relates to storing prefixes related to addresses in a binary trie fashion wherein each node in the trie has a prefix stored and no node is empty. The present invention is embodied in a method of storing prefixes related to addresses in a binary trie fashion; in a method of storing prefixes related to network addresses in a binary trie fashion wherein each node in the trie has a prefix stored and no node is empty; in a networking system where network addresses are stored in a binary trie fashion wherein each node in the trie has a prefix stored and no node is empty, and a computer program product which enables a computer to store addresses in a binary trie fashion wherein each node in the trie has a prefix stored and no node is empty.

**IB. Background of the Invention**

Storing addresses and prefixes related to addresses efficiently is important for any system that uses multiple addresses. It should be noted that this background section discusses forwarding tables associated with routers used in many Internet applications. However, the techniques and principles discussed apply to any system where a table is required to store prefixes related to multiple addresses. In networking systems, a large number of network addresses need to be stored efficiently.

IP addresses typically have 32 bits. An IP datagram contains both a source and a destination IP address. At a router, an incoming IP datagram must be forwarded to the next to hop, which is typically some neighboring machine. The router decides the next hop by consulting it routing table. This procedure is called IP forwarding, or table lookup. It should be noted that forwarding is distinct from computing the routes, which can be called routing and is handled by routing algorithm. IP forwarding is sometimes the most time-consuming task for a typical datagram.

Forwarding of datagrams in recent versions of IP relies on the storage of a set of IP address prefixes, each address being associated with a next hop within the networking system using IP. When an IP datagram arrives at a router within the networking system, the destination address is matched against the prefixes stored in the forwarding table associated with the router. The longest prefix that matches the destination IP address is found, and the next-hop information associated with that prefix is used for forwarding the datagram. This problem is called the Longest Matching Prefix (LMP) problem. As can be readily appreciated, the efficient storage of prefixes related to addresses is an important factor in addressing the LMP problem.

A conventional technique of storing prefixes in the forwarding table associated with a router in a networking system using IP is known as class-less Inter-Domain Routing (CIDR). *See* V. Fuller, T. Li, J. Yu, and K. Varadhan, "Classless inter-domain routing (CIDR): An address assignment and aggregation strategy," RFC-1519, September 1993. The intent of this approach is to reduce the size of tables storing addresses within the Internet. The IP forwarding approaches prior to CDIR relied on fixing the address formats so that destination network number could easily be extracted. Datagrams were forwarded to the next hop associated with each destination network. One forwarding table entry per network is required on each router. Such a storage requirement became problematic as the number of networks on the Internet expanded. CIDR reduces the size of these forwarding tables by grouping IP addresses with the same next hop information under a single prefix, when such aggregation is possible.

Table 1: An example of forwarding table containing a set of 6 prefixes

| Prefix | Next Hop |
|--------|----------|
| 0000 | $H_0$ |
| 01100 | $H_1$ |
| 01101 | $H_2$ |
| 011011 | $H_3$ |
| 110 | $H_4$ |
| 1101 | $H_5$ |

As an example of the above-mentioned forwarding process, consider Table 1, which contains a set of prefixes, each associated with a next hop. (The next-hop information will typically consist of the next router's IP address the outgoing physical interface.) For example, if an IP datagram has a destination address of "4.123.33.12", the leftmost eight bits are "00000100". For this address, the LMP from Table 1 is "0000", indicating a next hop of $H_0$. Another example is destination address "109.12.12.12", with leftmost eight bits "01101101". This address matches both "01101" and "011011"; since the latter is the longer prefix, the next hop is $H_3$.

A significant amount of earlier research on information storage and retrieval is applicable to the LMP problem, usually with only minor modifications. In particular, search approaches that rely on the binary representation of keys, rather than direct comparison of keys, have proven to be popular in this context. Knuth provides an overview of a variety of such "digital searching" approaches. *See* D. E. Knuth, The Art of Computer Programming: Volume 3, Sorting and Searching. Addison Wesley, second ed., 1998.

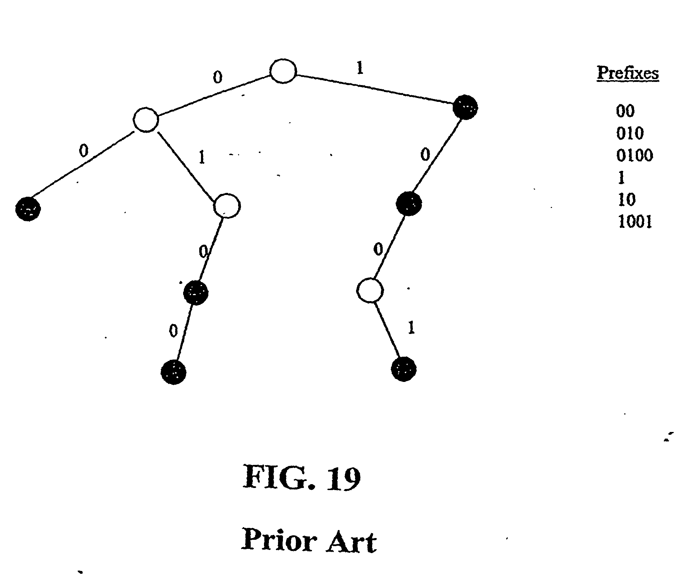

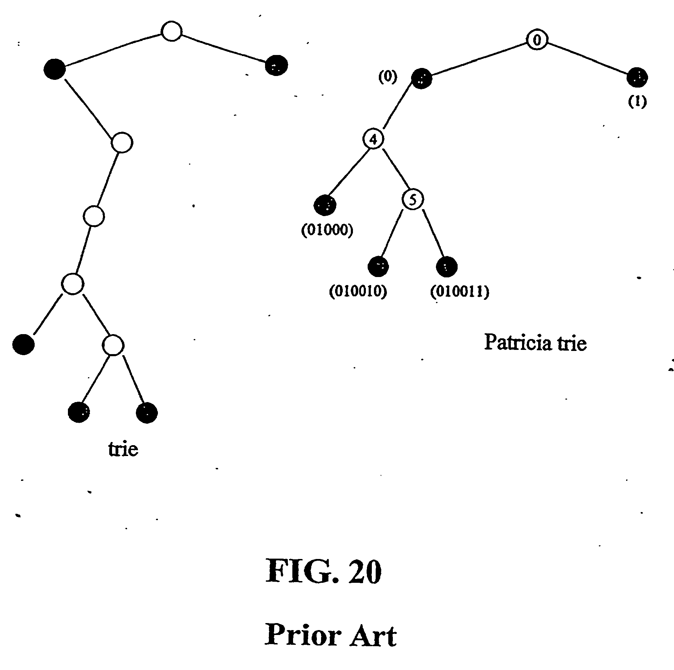

A trie structure is a kind of tree structure where branching at any level is determined by only a portion of the value stored in the nodes in the trie. Fredkin's trie structure is elegant, but suffers from inefficient memory usage, potentially requiring far more nodes than stored prefixes. *See* E. Fredkin, "Trie memory," Communications of the ACM, vol. 3, pp. 490- 500, 1960. Morrison's Patricia trie remedies this problem by removing each trie node that is not associated with a table entrie and has only one child. *See* D. Morrison, "Patricia-practical algorithm to retrieve information coded in alphanumeric," Journal of the ACM, vol. 15, no. 4, pp. 515-534; October 1968. These two structures, proposed by Fredkin and Morrison respectively, have influenced much of the recent work on IP forwarding. FIG. 19 shows an example of a conventional trie structure. FIG. 20 shows an example of a conventional trie structure and an equivalent conventional Patricia trie structure. In FIGs. 19-20, the darkened nodes store a prefix and the non-darkened nodes do not have any prefix stored.

Recent proposals for dealing with IP forwarding have been optimized with different design goals in mind. Several of these approaches emphasize the speed of the lookup (i.e., search) rather than updates to the tables(i.e., insert and delete). *See* M. Degermark, A. Brodnik, S. Carlsson, and S. Pink, "Small forwarding tables for fast routing lookups," in Proceedings ACM SIGCOMM'97, pp. 3-14, 1997; B. Lampson, V. Srinivasan, and G. Varghese, "IP lookups using multiway and multicolumn search," in Proceedings IEEE INFOCOM'98, pp. 1248- 1256, 1998; S. Nilsson and G. Karlsson, "Fast address lookup for Internet routers," in Proceedings of IEEE Broadband Communications 98, April 1998; H.H.-Y. Tzeng, "Longest prefix search using compressed trees," in GLOBE-COM'98, Global Internet Mini Conference, pp. 88-93, November 1998; and M. Waldvogel, G. Varghese, J. Turner, and B. Plattner, "Scalable high speed IP routing lookups," in Proceedings ACM SIGCOMM'97, pp. 25-36, 1997.

The reason for emphasizing the speed of the lookup is that although routing updates are fairly frequent, routing protocols can take several minutes to accommodate an update; forwarding tables on any particular router do not need to be changed more than at most once per second for current systems. One therefore envisions the use of some dynamic routing table structure elsewhere on the router, which periodically updates the forwarding tables.

The current emphasis on search speed leads to an unbalanced design, one that is out of step with current and future needs of the Internet. Labovitz et al., point out that Internet core routers typically exchanged between three to six million updates per day in 1996. *See* C. Labovitz, G. R. Malan, and F. Jahanian, "Internet routing instability," IEEE/ACM Transactions on Networking, vol. 6, no. 5, pp. 515-528, October 1998. As the Internet grows, and as support for mobility expands, an even greater need for forwarding tables that can be updated efficiently can be expected.

Recently, there has been a flurry of work on the IP forwarding problem. In the present discussion, software approaches are emphasized. It ahould be noted that many software approaches can be implemented efficiently in hardware. One such hardware implementation of the present invention has also been provided. A comparison of several of these approaches can be found in the work of Filippi et al. *See* E. Filippi, V. Innocenti, and V. Vercellone, "Address lookup solutions for gigabit switch/router," in GLOBECOM'98, Global Internet Mini Conference, pp. 82-87, November 1998.

Degermark et al. describe an approach optimized for execution on an off-the-shelf processor. To provide efficient operation, Dagermark et al keeps the table data small (so the entire forwarding table can fit into cache) while simultaneously trying to minimize the number of memory accesses required to search the table. *See* M. Degermark, A. Brodnik, S. Carlsson, and S. Pink, "Small forwarding tables for fast routing lookups," in Proceedings ACM SIGCOMM'97, pp. 3- 14, 1997. This way of storing reduces the number of memory accesses (at the expense of greater memory utilization) by searching the prefix tree (effectively a trie) only on three separate levels, as opposed to performing one memory access for each of the 32 trie levels. In the prefix tree structure, only certain bit patterns are possible at search of some level; Degermark et al. are therefore able to utilize a data compression technique. Though the gains in their example are somewhat limited (they can effectively store 16 bits of a bit vector with only 10 bits, and this is only for one component of the overall data structure), their compression approach is a notable one. This way of storing addresses is not designed to support efficient updates.

Waldvogel et al. See M. Waldvogel, G. Varghese, J. Turner, and B. Plattner, "Scalable high speed IP routing lookups," in Proceedings ACM SIGCOMM'97, pp. 25-36, 1997 describe another approach for searching a trie structure. Rather than starting at the root of the trie and working down, their approach starts at the middle level, and works up or down depending on the information it finds there. A level is searched quickly through hashing. Only nodes that would be in the trie are stored. If a level is searched and no match is found, one knows that a smaller prefix is the only possibility. On the other hand, a hit in the hash table could either mean the longest matching prefix has been found, or that one should look even deeper for a longer prefix. The key idea, however, is that not every level of the trie needs to be searched.

The approach is quite scalable, requiring only 1gb level searches for b-bit prefixes. The selection of good hash functions-ones that can be calculated quickly and can evenly distribute the nodes-is not discussed herein, but is an important issue. Also, the structure makes heavy use of precomputation and does not support efficient updates. However, this approach is used on a specific IP router designed by Partridge et al. *See* C. Partridge, P. P. Carvey, E. Burgess, I. Castineyra, T. Clarke, L. Graham, M. Hathaway, P. Herman, A. King, S. Kohalmi, T. Ma, J. Mcallen, T. Mendez, W. C. Milliken, R. Pettyjohn, J. Rokosz, J. Seeger, M. Sollins, S. Storch, B. Tober, G. D. Troxel, D. Waitzman, and S. Winterble, "A 50-Gb/s IP router," IEEE/ACM Transactions on Networking, vol. 6, no. 3, pp. 237-248, June 1998.

Nilsson and Karlsson utilize a variation of a Patricia trie that replaces i complete levels of a binary trie with a single node of degree 21. *See* S. Nilsson and G. Karlsson, "Fast address lookup for Internet routers," in Proceedings of IEEE Broadband Communications 98, April 1998. This approach results in a very dense table, but again is not designed to support efficient updates. Another approach that compresses the trie, and thereby reduces the average number of memory accesses per search, is described by Tzeng. *See* H.H.-Y. Tzeng, "Longest prefix search using compressed trees," in GLOBE-COM'98, Global Internet Mini Conference, pp. 88-93, November 1998.

Lampson et al. propose a substantially different approach to the LMP problem by viewing it as a variation of binary search. *See* B. Lampson, V. Srinivasan, and G. Varghese, "IP lookups using multiway and multicolumn search," in Proceedings IEEE INFOCOM'98, pp. 1248-1256, 1998. Since a prefix represents a range of IP addresses, the prefix can be represented by two IP address-the smallest and the largest in the range. By sorting the (at most) 2p boundary addresses for p prefixes, we essentially define buckets of addresses where each address in the bucket has the same next hop. The approach is quite memory efficient, however insertion and deletion are relatively inefficient operations.

Srinivasan and Varghese exploit the well-known technique of prefix expansion, which will reduce the number of memory accesses in a typical search at the cost of potentially increasing memory requirements and making updates of the forwarding table more difficult. *See* V. Srinivasan and G. Varghese, "Faster IP lookups using controlled prefix expansion," in ACM SIGMETRICS'98, pp. 1-10, June 1998. The paper's main contribution is the description of a formal approach based on dynamic programming to provide a way of searching that minimizes memory utilization. A similar scheme based on prefix expansion is described by Gupta et al. See P. Gupta, S. Lin, and N. McKeown, "Routing lookups in hardware at memory access speeds," in Proceedings IEEE INFOCOM'98, pp. 1240-1247, 1998. Their approach, however, focuses on a proposed hardware implementation rather than optimality.

M. Shishibori et al., "Design of a Compact Data Structure for the Patricia Trie" in IEICE, VOL. E81, NO. 4, April 1998, discusses the Patricia trie, which has a tree structure that all nodes which have only one arc are eliminated, were this node is called a single arc node.

The conventional approaches that have been discussed above are designed primarily to optimize lookup speed. In contrast to these approaches, Doeringer et al.'s work on DP-Tries attempts to optimize forwarding table update speed as well as lookup speed. *See* W. Doeringer, Günter Karjoth, and M. Nassehi, "Routing on longest-matching prefixes," IEEE/ACM Transactions on Networking, vol. 4, no. 1, pp. 86-97, February 1996. Their approach is a variation of the Patricia trie, with efficient insert and delete algorithms defined, as well as search. It is worth noting that more dynamic structures such as DP-Tries can be used to complement an approach that emphasizes lookup speed, by maintaining an up-to-date routing table that is accessed by the forwarding tables periodically.

To accommodate the ever expanding needs of applications, specifically networking applications, a structure and method storing prefixes related to addresses is required that at least meets the following criteria:

- Efficient and scalable memory usage.

- The structure should support efficient and simple insert, delete, and search operations.

- The structure should support a pipelined hardware implementation.


## II. SUMMARY OF THE INVENTION

To solve the problems in the prior art it is in objective of the present invention to provide a way of storing prefixes related to addresses. It is a further objective of the present invention to provide a way of storing prefixes related to network addresses in a networking system. It is another objective of the present invention to provide a networking system that stores prefixes related to addresses in an efficient manner. It is yet another objective of the present invention to provide a computer program product that enables a computer associated with routers in a networking system to store prefixes related to addresses in an efficient manner.

The objects of the invention are achieved with the features of the claims.

An exemplary method of storing a set of prefixes related to a set of addresses, comprising: storing the prefixes in a binary trie fashion wherein each node in said binary trie is associated with at least one of said prefixes and no node in said binary trie is empty.

Preferably a first prefix is inserted into an empty trie by allocating a root node and placing said prefix in the root node.

Preferably a prefix other than a first prefix, comprising k-bits, with a representation $b_0, b_1,...,b_{k-1}$ wherein k is an integer greater than 0, is inserted using a process comprising: designating a root node of said trie as a current node and $b_n = b_0$ and the prefix as the current prefix; terminating insertion if the current node has the current prefix already stored in it; examining the current node's left child, if $b_n = 0$ and examining the current node's right child if $b_n = 1$; allocating a new node and placing the current prefix if one of left child and right child do not exist, and designating said new node as the current node; assigning n=n+1; repeating until n=k; replacing a previously stored prefix in the current node with the current prefix and designating the previously stored prefix as the current prefix and repeating the steps.

Preferably the trie is searched for an LMP of an address comprising k-bits, with a representation $b_0, b_1,...,b_{k-1}$ wherein k is an integer greater than 0 using a process comprising: designating a root node as current node as well as an LMP node if the root node has a matching prefix and $b_n = b_0$; designating current node as an LMP node and carrying said LMP node lower if the current node has a matching prefix and if the matching prefix is longer than the LMP node; designating the current node's left child as the current node, if $b_n = 0$ and designating the current node's right child as the current node if $b_n = 1$; n=n+1; repeating the steps until the current node is at a lowest level of the trie; and selecting a prefix corresponding to said lowest trie as an LMP if said prefix is a match.

Preferably, a prefix corresponding to an address is deleted in said trie using a process comprising: searching for a matching node corresponding to said prefix; deleting the matching node if the matching node is a leaf node and terminating the process; deleting said matching node and moving up one of said matching node's children if said matching node is not a leaf node and deleting said one of said matching node's children; and repeating the steps until a leaf node is deleted.

Preferably the trie is balanced for minimizing a depth in a worst-case search.

The present invention provides a method of converting a trie with stored addresses into a depth-optimal sub trie that has all nodes representing addresses, said method comprising: finding a lowest level of said trie that has a full node and designating said lowest level as i, wherein i is an integer; examining each node at a level corresponding to i-1; moving up a prefix if there is an empty node at level i-1 from the bottom of the deeper subtrie of the empty node; and continuing said merging until the root node is reached.

Yet another example relates to a method of converting a simple trie, with stored addresses and known probabilities of visiting each node in said simple trie, into a search-optimal trie with a minimum number of expected steps per search, said method using dynamic programming and said method comprising: calculating an array $A_\alpha$ for each node $\alpha$ using a bottom-up process such that $A_\alpha[i]$ holds a least expected number of search steps assuming i nodes are promoted out of a sub-trie with $\alpha$ as a root, wherein,

$$A_\alpha[i] = f(A_\beta, A_\gamma, P_\beta, P_\gamma)$$

$\beta$ and $\gamma$ are the left and right children of $\alpha$;

$P_\beta$ and $P_\gamma$ represent the probability than $\beta$ and $\gamma$ are visited during a search assuming that $\alpha$ has been visited; associating with each $A_\alpha[i]$ a number of prefixes that must be promoted from $\beta$ and $\gamma$ to generate optimal subtries associated with each $A_\alpha[i]$; and working recursively top-down from the root to issue requests to child nodes to promote prefixes up, the root node requesting 1 prefix if the root node does not hold a prefix, the root node requesting 0 prefix if the root node holds a prefix, said requests being based on the array A and the associated numbers.

According to the present invention, the stored prefixes are preferaly related to Internet addresses and said trie is located in an IP router.

Still another example is a networking system comprising a plurality of routers, each router having an address storage, wherein in each address storage a set of prefixes related to network addresses corresponding to the network system are stored in a form of a binary trie, said binary trie comprising a plurality of nodes wherein each node is associated with a prefix of at least one of said network addresses and no node is said binary trie is empty.

Preferably the binary trie is balanced for minimizing a depth in a worst-case search

Still another example is a computer program product including a computer-readable medium, said program enabling one or more of computers associated with a networking system to store a set of addresses stored in each router within said networking system in a binary trie fashion wherein each node in said binary trie is associated with a prefix of at least one of said addresses and no node in said binary trie is empty.

Preferably, in the example of the computer-program product said trie is balanced for minimizing a depth in a worst-case search.

Still another example is a system for storing a set of addresses in a binary trie fashion wherein each node in said binary trie is associated with a prefix of at least one of said addresses, wherein said system comprises a pipeline, said pipeline further comprising a plurality of stages, each stage from said plurality of stages corresponding to a level in said binary trie, said stage consisting essentially of a memory component, a bank of latches and a simple logic, said bank of latches storing a prefix, a destination IP address, a pointer ponting to an appropriate node, an instruction that indicates the task of the corresponding stage, and a state containing information about a state of the instruction.

Preferably, each stage of said pipeline comprises latches holding input and output information, memory containing information corresponding to nodes at a level, a stack containing pointers to unused node addresses and comparators.

### III. LIST OF FIGURES

The above objectives and advantages of the present invention will become more apparent by describing in detail preferred embodiments thereof with reference to the attached drawings in which:

FIG. 1 depicts prefix distribution, node distributiom and depth optimal distribution for mae-east prefixes.

FIG.2 shows a preferred embodiment of the present invention after the insertion of sequence (10011, 01100, 1111, 0100, 011110, 10100, 010, 00011).

FIG.3 shows the preferred embodiment after the insertion of prefix 01.

FIG.4 shows the preferred embodiment after the deletion of prefix 01100 is.

FIG.5 shows the preferred embodiment with the same prefixes as FIG.2 but with a different insertion sequence (0100, 01, 10011, 000111, 010, 10100, 1111, 011110)

FIG.6 shows two possible bonsai structures.

FIG.7 shows the merging of two depth optimal subtries.

FIG.8 shows a search optimal subtrie.

FIG.9 shows depth for random, depth optimal, and the search optimal subtrie.

FIG.10 shows average node level for random, depth-optimal, and search-optimal bonsai.

FIG.11 shows average comparisons per search for random, depth-optimal, and search-optimal bonsai.

FIG.12 shows a distribution for the first byte of the prefixes for the mae-east forwarding table.

FIG.13 shows a distribution for the first byte of the destination IP addresses for the fix-west trace.

FIG.14 illustrates an example of a pipeline implementation of bonsai.

FIG.15 shows an example of a search in stage i using the pipeline implementation of FIG.14.

FIG.16 shows an example of an insert in stage i using the pipeline implementation of FIG.14.

FIG.17 shows an example of a delete in stage i using the pipeline implementation of FIG.14.

FIG.18 shows an embodiment of a network system with routers storing prefixes related to addresses in an efficient manner according to the present invention.

FIG. 19 shows an example of a conventional trie structure.

FIG. 20 shows an example of a conventional trie structure and an equivalent conventional Patricia trie structure.

In terms of design objectives, the approach of the present invention has much in common with Doeringer et al.'s DP-Tries, but there are several notable differences:

- The algorithms for search, insert, and delete are considerably simpler than those for the DP-Tries.

- Nodes in the present invention are relatively simple in comparison to the DP-Trie nodes. Each DP-Trie node requires three pointers to other nodes, two prefixes, and one index value that must be able to represent integers in the range of 0 up to the number of bits in an IP address. The nodes in the present invention contains one prefix and two pointers to other nodes.

- DP-Tries in general have more nodes than the number of prefixes. These "overhead" nodes store information required to search the table. The present invention has no overhead nodes.

The structure of a DP-Trie depends only on the prefixes in the table, not upon the ordering of the insertions and deletions of the prefixes. The structure of the trie used in the present invention is, in general, dependent on the insert and delete order.

The advantages of the present approach include the following:

- Memory usage is efficient and scalable. The bonsai uses only a single node for each prefix, with each node comprising two node pointers and a prefix pointer. It is straightforward to store the nodes and the prefixes in arrays; therefore the pointer sizes can be restricted to 1g p bits where p is the number of prefixes stored.

- The structure supports efficient and simple insert, delete, and search operations. If b is the number of bits in an IP address, the algorithms will require 0(b) time.

- The way of storing prefixes according to the present invention is dependent on the sequence of insert operations. The present invention provides different optimality criteria. The first is a Greedy algorithm that calculates the binary trie with minimum overall depth. The second is a dynamic programming approach that derives the bonsai trie with the minimal number of expected steps per search. This search-optimal bonsai approach can assume an arbitrary distribution of IP destination addresses.

- The present invention is particularly well suited for a pipelined hardware implementation. Throughput can be as high as one search (that is, one longest prefix match) per memory-access time. Inserts and deletes can be accomplished with no more than two clock cycle stalls in the pipeline.

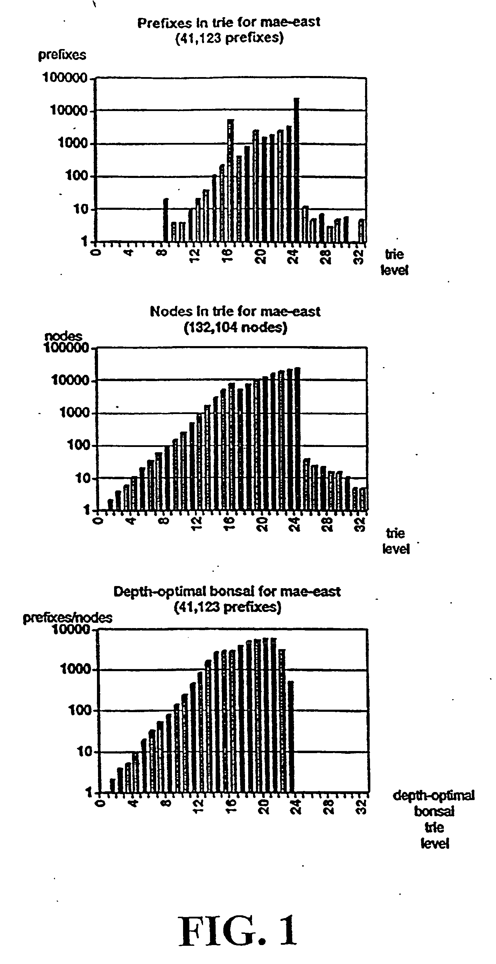

Intuitively, the present invention is a variant of the trie approach. It eliminates nodes that are not associated with table entries by moving the prefixes in a trie upwards, until all nodes are associated with a prefix. Such an approach has two positive effects. First, it reduces memory usage. Second, it makes the trie more "shallow", potentially allowing for fewer memory lookups per search. As an example, FIG. 1 shows the trie prefix distribution, the trie node distribution, and the prefix/node distribution for the depth-optimal bonsai (discussed further in Section IVC.1) and for the mae-east forwarding table (discussed further is Section IVD). The levels of the trie are labeled from 0 (the root) to 32 (the maximum length of a prefix). The present invention greatly reduces the number of nodes needed, further, prefixes are moved further up in the trie, reducing the number of steps per search.

### IVA. Bonsai

The preferred embodiment of the present invention, described herein, is named bonsai. Bonsai stores prefixes related to Internet addresses. The bonsai is a binary trie, where each node has an associated prefix. Insert, search, and delete operations, as well as certain implementation issues are discussed herein in detail. The bonsai has certain invariants which are presented here. Following is a proof showing that these invariants hold under the insert and delete operations.

### Lemma 1 (Bonsai invariants)

A bonsai has the following properties:

1. The bonsai is a "packed" trie, in the sense that it contains only nodes that represent a routing-table entrie.

2. All potential matching prefixes for an IP address can be found by descending the bonsai in typical trie fashion, i.e., by using the ith bit of the IP address to choose the direction taken at level i of the bonsai.

### IVA.1 Insert

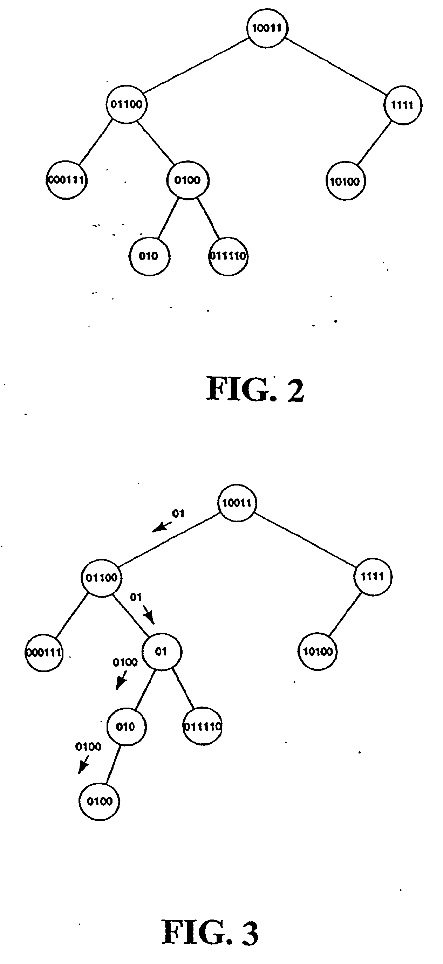

When the first prefix is inserted into an empty trie, a root node is allocated and the prefix pointer of the node is set appropriately. Subsequent insertions follow their way down the trie structure in the usual way, until the first free location is found. If a k-bit prefix with a binary representation of $b_0, b_1,...,b_{k-1}$ is inserted, the algorithm starts at the root node. If $b_0 = 0$, the root node's left child is examined; otherwise the right child is examined. If no left (right) child exists, a node is allocated at that position and the prefix is placed there. If a left (right) child already exists, then bit $b_1$ is examined in the context of the child node. Only one copy of a prefix is allowed in the trie. If a duplicate copy is inserted, it will be found during the descent down the trie, and the current insertion will be stopped without modifying the trie. FIG. 2 shows the status of the bonsai after a sequence of prefixes has been inserted.

Not all prefixes will fall through the trie and become a leaf node, however. For example, consider insertion of the prefix 01 into the trie shown in FIG. 2. After following the 0-child of the node holding prefix 10011 and the 1-child of the node holding prefix 01100, there is no way to go further down the trie. When a prefix x falls through the trie as far as it can and finds a node already there holding prefix y, prefix y is dislodged and allowed to fall further down the trie, just as if y were being inserted. Unless y equals x (in which case the insertion terminates), y will be longer than x and will therefore be able to fall further down the trie. Note that an insertion may cause numerous prefixes to be dislodged, but the procedure will require in the worst case only $O(d)$ operations where d is the depth of the trie. For example, FIG. 3 shows the state of the example trie after the 01 prefix has been inserted. The 01 prefix dislodges the 0100 prefix, which falls two levels down in the trie where it generates a leaf node.

### IVA.2 Search

Searching the bonsai given an IP address is relatively intuitive. One descends the trie in the usual way, as noted above in the section describing insertion. At each step of the descent, a comparison is made to see if the IP address is a match for the stored prefix. If so, and if that prefix is longer than any previously found match, a pointer to the node is carried along as lower levels of the trie are searched. An IP address may match several prefixes as it descends the trie, but all potential matches will be in its path.

One consequence of this approach is that at each level of the trie, a comparison against the stored prefix is required. Such comparisons are not necessary for a pure trie approach, and will add a constant factor cost.

Consider searching the bonsai in FIG.2 for the LMP of 01000000..., an IP address. At the root node there is no match with prefix 10011. The 0-child node is visited, but there is no match with prefix 01100. That node's 1-child is visited, and there is a match with prefix 0100, so this prefix is remembered. Finally, that node's 0-child is visited, and again a match is found with prefix 010. However, this new match is shorter than the previous match. Since one can go no further down the trie, 0100 must be the LMP.

### IVA.3 Delete

As with insert and search, the delete operation involves a traversal down the trie, searching for matches against the prefixes. If the prefix to be deleted is resident at a leaf node, the prefix is deleted and the node is removed from the trie, requiring an update of one of its parent node's child pointers. If the prefix to be deleted is associated with a node that is not a leaf, however, care must be taken to maintain the trie structure. The key insight is that any prefix in the node's subtrie can replace the deleted prefix. Though there are many ways to select a replacement. One that will be easily pipelined is chosen in the present context. The prefix associated with a child node is moved up, and replaced with the prefix of one of its children, etc., until eventually a leaf node is reached. Then the leaf node (whose prefix has moved up to the parent node) can be deleted. In such cases, the prefixes can be viewed as "percolating" up the trie. Note that it is always a leaf node that is deleted.

In the case where there are two children for a node, it will be possible to choose either the left or right child's prefix to percolate up. (If a node has only one child, there is no choice.) When there is a choice, it is possible to use a static approach (e.g., the 0-child is preferred), or a more dynamic one (e.g., random selection).

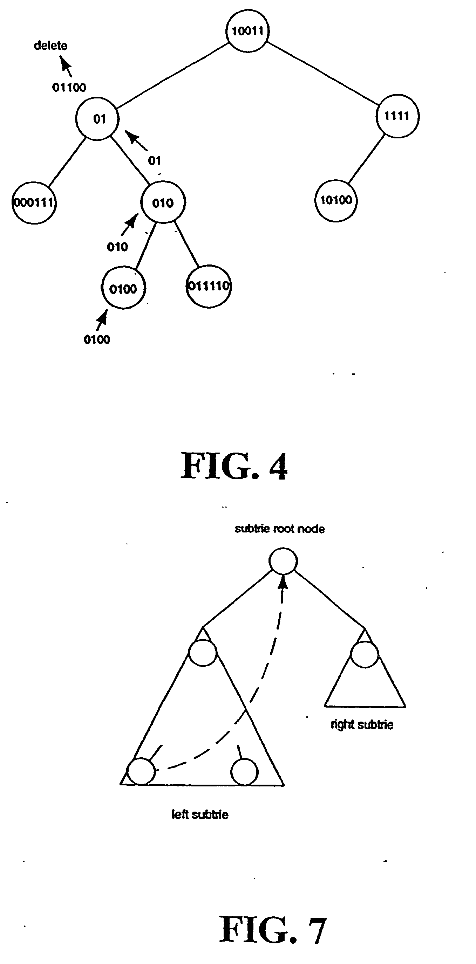

For example, consider deleting prefix 01100 from FIG. 3. The process and resulting trie are shown in FIG.4. The process is started at the root node, no match is found with prefix 10011. 0-child of the root node is visited next, and a matching prefix to be deleted is found. Either the 0-child or the 1-child prefix can be percolated. Assume that the 1-child is preferred and 01 percolates up. Thereafter, assume that the 0-child is preferred and 010 percolates up. This node has only one child, so 0100 percolates up. Since the leaf node has been reached, it is deleted.

### IV.B Optimal Bonsai Tries

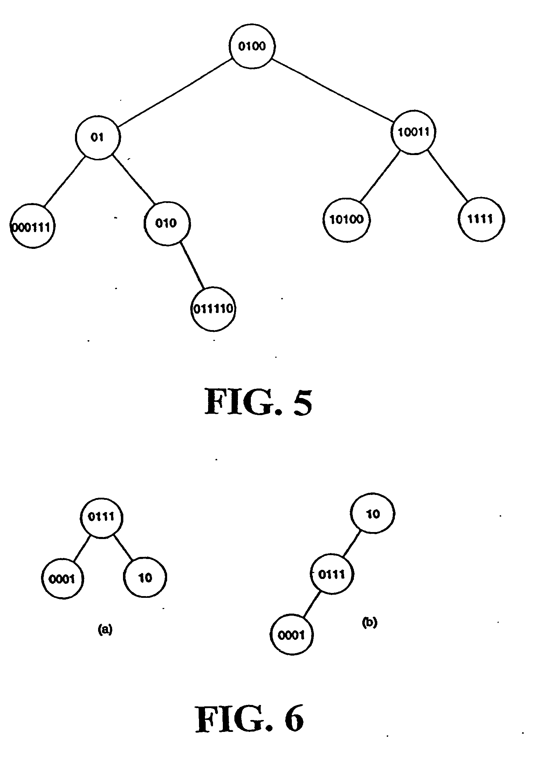

One consequence of the bonsai operations is that the structure of the trie is dependent (in general) upon the order of the insert and delete operations. For example, the bonsai in FIG. 5 contains the same prefixes as the bonsai in FIG.2. However, the bonsai in FIG. 5 has a smaller average depth for the prefixes. It is therefore possible to manipulate the trie to optimize some performance metric. For example, it may be desirable to balance the trie as much as possible, so as to minimize the depth of the worst-case search. Or it may be desirable to minimize the depth of the average-case search.

It is worth noting that minimizing the worst-case and the average-case search are conflicting criteria. For example, consider the two small bonsai structures shown in FIG. 6. Assuming a uniform probability for all IP addresses, the expected number of comparisons to search trie (a) will be 2, since all searches will require exactly 2 comparisons. For trie (b), the expected number is (50%)(1) + (25%)(2) + (25%)(3) = 1.75.

Assuming uniform distribution, a unbalanced trie has better average-case search performance than the balanced trie. Of course, the uniform distribution assumption will not be valid in real routers. However, whenever the probability distribution is known or can be estimated-for example, by tallying each time a node is accessed during a search-it will be possible to adjust the trie to optimize average-case behavior. Though calculation of optimal bonsai may be too time-consuming after each insert or delete operation, it may be reasonable to periodically restructure the bonsai so that it better meets the optimization criterion.

In the following sections preferred embodiments of methods for calculating two different types of optimal bonsai is provided. The first is a greedy algorithm that calculates the bonsai trie with minimum overall depth. The second is a dynamic programming approach that derives the bonsai trie with the minimal expected number of search steps, based on an arbitrary distribution of destination IP addresses.

Terminology related to the optimization methods is discussed herein. An empty node is a trie node that does not represent a routing-table entry. A full node does represent an entry. A subtrie consists of levels of nodes, where nodes of level $i$ are $i$ hops from the root of the subtrie. The root of the subtrie is the only node at level 0. Greek letters are used to represent nodes. The level of node is $\alpha$ labeled $d_\alpha$. The root node that this level is relative to should be clear from the context. If the root node of some subtrie is labeled $\alpha$, it may also be used to represent the entire subtrie rooted at $\alpha$; again, the meaning should be clear from the context. For any subtrie rooted at $\alpha$, let $w^\alpha$ represent the total number of prefixes at or below level $i$. $w_i^\alpha$ is called the weight of level $i$ of the subtrie rooted at $\alpha$. For example, if $\alpha$ is the root node of the full trie in FIG. 2, then $w_0^\alpha = 8, w_1^\alpha = 7, w_2^\alpha = 5, w_3^\alpha = 2,$ and $w_i^\alpha = 0$ for all $i \geq 4$. Let $\beta$ be the node with prefix 0100: then $w_0^\beta = 3, w_1^\beta = 2,$ and $w_i^\beta = 0$ for all $i \geq 2$. When the subtrie is obvious from context $w_i$ is also used to represent the subtrie. Finally, the depth of a subtrie is the level of its deepest node.

## IVB.1 Depth-Optimal Bonsai

A greedy algorithm is described herein that starts with a simple trie, compresses it by removing all nodes that do not represent a routing table entrie, and creates a bonsai with minimum depth and minimum average node (prefix) level. This preferred embodiment is called a depth-optimal bonsai. A depth-optimal subtrie is a subtrie such that no other subtrie with the same set of prefixes has a smaller $w_i$ for any $i$.

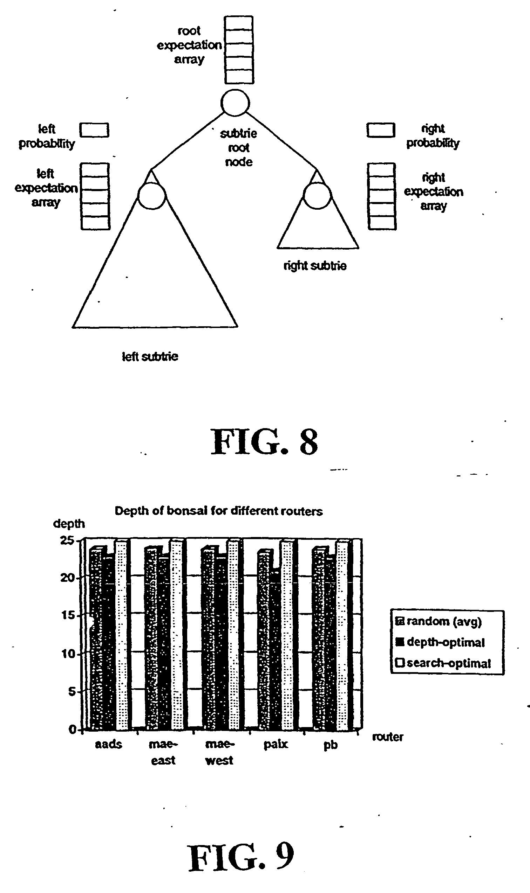

The algorithm works from the bottom up. From the basic trie structure for the routing table, including both empty and full nodes, depth-optimal subtries are recursively merged up. The lowest level of the trie where there is a full node is found. This is called level $i$. (All nodes found at this level will necessarily be full.) Each node of the trie at level $i - 1$ is examined. (For a node to exist at any level in the trie, it must either be full or have at least one full descendant.) If a node at level $i - 1$ is full, no merging of subtries is possible and therefore no action is taken. If the node is empty, this implies that a prefix can be moved up (promoted) from one of its subtries, resulting in a depth-optimal subtrie rooted at level $i - 1$. In an arbitrary (full) node from the lowest level of the deeper subtrie is chosen to be promoted, as shown in FIG. 7. If both subtries have the same depth, a node is arbitrarily selected from the lowest level of either subtrie. This merging process continues up the levels of the trie until the root node is reached.

## Lemma 2 (Depth-optimal subtrie invariants)

Using the algorithm described above, each depth-optimal subtrie has the following properties:

1. All prefixes in the subtrie have a common substring represented by the position of the subtrie root node within the trie, and all prefixes that share the substring are in the subtrie.
2. The subtrie is depth-optimal in the sense that it is impossible to rearrange the prefixes such that the level weights,

$w_i$, can be reduced.

Proof: Induction on the levels of the trie is used, beginning with level i, the level of the deepest (full) node in the original trie.

Node a in level i must be full, and can have no children. In this case it is clear that the invariants of Lemma 2 are maintained. It is now shown that all subtries rooted at level j - 1 maintain the invariants, assuming all subtries rooted at level j maintain them. Node $\alpha$ in level j - 1 will be either full or empty.

If $\alpha$ is full, there is no variation on the structure of the subtrie rooted at $\alpha$ that allows for a lower $w_i$ for any i. This is proven by contradiction. Assume there does exist a reorganization of the subtrie that would improve some $w_i$. This reorganization cannot involve moving the prefix associated with $\alpha$ to a lower level, since this would violate the first subtrie invariant; the prefix is already located at its lowest possible level. Therefore the reorganization must be accomplished leaving the prefix associated with $\alpha$ in place. It is impossible to move a prefix from one subtrie to another, since the root nodes of the subtries represent distinct prefixes that cannot be nested. This implies that either the left subtrie or the right subtrie can be improved given its current prefixes, which contradicts the assumption that the merging subtries are depth-optimal.

If $\alpha$ is empty, the algorithm selects a prefix, $\delta$, from the lowest level of the deeper subtrie to take its position. Let $\beta$ be the root of the left depth-optimal subtrie of $\alpha$, and $\gamma$ be the root of the right depth-optimal subtrie of $\alpha$. Without loss of generality, assume that subtrie $\beta$ is deeper than $\gamma$. By promoting $\delta$, the resulting subtrie rooted at $\alpha$ will have

$$\dot{w}_0^\alpha = 1, \text{ and } \dot{w}_i^\alpha = w_{i-1}^\beta + w_{i-1}^\gamma - 1 \text{ for all i such that } \dot{w}_{i-1}^\beta \text{ is greater than 0. In effect, the promotion of}$$

$\delta$ has resulted in a left subtrie with level weight $w_i^\beta$ reduced by one for each non-zero weight. To prove the resulting subtrie is depth-optimal, it must be shown that there is no other node, $\varepsilon$, that can be promoted instead of $\delta$ that can result in a superior subtrie. Assume $\varepsilon$ is in the subtrie rooted at $\beta$. For the promotion of $\varepsilon$ to be superior, the resulting left subtrie must have a level weight less than $w_j^\beta - 1$ for some level j. Note, however, that insertion of a prefix can add at most 1 to any level weight. Thus, if one starts with the left subtrie without $\varepsilon$ and then inserted it, one would generate a new (complete) left subtrie with a level j weight less than $w_j^\beta$. This violates the depth-optimality assumption for the left subtrie. Thus, no node will improve the subtrie more than promoting a prefix at the lowest level. A similar argument handles the case for when $\varepsilon$ is assumed to come from the right subtrie.

A consequence of Lemma 2 is that the algorithm generates a bonsai trie that is depth-optimal in the sense described above. It can also be shown that the number of levels in the bonsai trie is minimized, and that the average depth of the nodes is minimized.

## IVB.2 Search-Optimal Bonsai

In this section, a preferred embodiment of a dynamic programming method that computes the bonsai trie with the minimum number of expected steps per search is described. The approach assumes an arbitrary distribution of destination IP addresses. The structure starts as a simple trie that is augmented such that the probability of visiting each node on any given search is known. (For example, the root node must be visited on every search, so its probability is set to 1.) In practice, this probability distribution is likely to change over time. However, a distribution can easily be estimated for any desired period of time by tallying the nodes that are visited in each search of the simple trie.

Dynamic programming is useful here because the problem exhibits both optimal substructure and overlapping subproblems. *See* T. H. Cormen, C. E. Leiserson, and R. L. Rivest, Introduction to Algorithms. MIT Press, 1990. In this preferred embodiment one begins at the lower levels of the simple trie, and proceed upwards by promoting prefixes appropriately. However, the number of prefixes that must be promoted out of any subtrie will not be immediately known. The approach therefore uses in two phases.

In the first phase, for each node, $\alpha$, in the simple trie an array, $A_\alpha$ is calculated. $A_\alpha$ [i] will hold the optimal (least) expected number of search steps for this subtrie, assuming i prefixes are promoted out of the subtrie. How large do these arrays need to be? Since a node can only promote prefixes to its direct ancestors, node $\alpha$ will never have to consider the promotion of more than $d_\alpha$ nodes. Therefore, values of $A_\alpha[i]$ in the range $0 \le i \le d_\alpha$. It should be noted that there must be a special value for array elements that represents an infeasible number of promotions. For example, it is impossible to promote 4 prefixes from a subtrie that contains only 3 to begin with. During the calculation of these arrays, which is a bottom-up process, the number of prefixes that must be promoted from both the left and right subtries to generate the optimal subtrie must also be retained. Once the arrays are calculated, the second phase works from the top down to discover the optimal structure and create the corresponding bonsai. Starting with the root node-which does not need to promote any prefixes-each node will issue requests to its left and right children to promote some number of prefixes and generate an optimal subtrie based on that number.

Consider the first phase, which is the calculation of the A arrays. FIG. 8 describes the basic situation. Label the root node of the subtrie $\alpha$, the left child $\beta$ and the right child $\gamma$. To calculate $A_\alpha$, the knowledge of $A_\beta$ and $A\gamma$ is needed, as well as the probability that each child will be visited (assuming the root node has been visited), which are labeled $p_\beta$ and $p_\gamma$. (Note that if both the left and the right child exist, $p_\beta + p_\gamma$ will equal 1.)

First consider the case when node $\alpha$ already contains a prefix. The subtrie structure corresponding to $A_\alpha$ [0] is straightforward; it is the case where no nodes are promoted out of either the left or right subtrie. $A_\alpha$ [0] = $1+p_\beta A_\beta[0]$ $+p_\gamma A_\gamma[0]$. For calculation of $A_\alpha[1]$ there are two possibilities to consider. Promotion of 1 from the left and 0 from the right, or promotion of 0 from the left and 1 from the right. The best choice depends on which value is smaller, $p_\beta A_\beta[1]+p_\gamma A_\gamma$ [0] or $p_\beta A_\beta[0]+p_\gamma A_\gamma[1]$. This procedure continues until all required values of $A_\alpha$ are calculated. In general:

$$A_\alpha[i] = 1 + \min_{j+k=i} \{p_\beta A_\beta[j] + p_\gamma A_\gamma[k]\}$$

within the range $0 \leq i \leq d\alpha$. Again, the j and k value that generated the minimal $A_\alpha[i]$ should also be retained.

In this case where $\alpha$ is empty, the need to promote a prefix into $\alpha$ as well as promote prefixes above $\alpha$. Even promoting zero prefixes from $\alpha$ will require promotion of one prefix from one of the two subtries; the best choice depends on which value is smaller, $p_\beta A_\beta[1]+p_\gamma A_\gamma[0]$ or $p_\beta A_\beta[0]+p_\gamma A_\gamma[1]$. In general:

$$A_\alpha[i] = 1 + \min_{j+k=i+1} \{p_\beta A_\beta[j] + p_\gamma A_\gamma[k]\}$$

within the range $0 \leq i \leq d_\alpha$.

### IV.C Experimental Results and Analysis

In the experiments, Internet forwarding tables made available at the Internet Performance Measurement and Analysis (IPMA) web site is used. *See* Internet Performance Measurement and Analysis Project (IPMA). Available at http://nic.merit. edu/~ipma/. These forwarding tables, which are updated daily, have become standards for IP forwarding experiments. The data used here is from 17 August 1998. In order to simulate a realistic distribution of IP datagram destinations, a trace of real datagrams destination IP addresses from fix-west is used. The trace contains 2,146,573 addresses (five-minutes' worth), recorded on 22 February 1997. This trace is made available by the National Laboratory for Applied Network Research (NLANR). *See* National Laboratory for Applied Network Research (NLANR). Available at http://www.nlanr.net/NA/. It is to be noted that this trace was not gathered from the routers whose forwarding tables are available at the IPMA page.

Four metrics for the bonsai are considered:

- the depth,

- the average level of a node/prefix,

- the expected number of steps (or comparisons) per search, assuming a uniform distribution of destination IP addresses, and

- the expected number of steps per search, assuming the distribution of destination IP addresses defined by the fix-west trace.

Table 2 provides some description of the routing tables for the five locations. For each site, the number of prefixes in the table equal to the number of nodes in the bonsai are listed. Also listed are the hit rate and miss rate for the fix-west trace relative to the given forwarding table. As discussed earlier, the trace is not associated with the forwarding tables, creating the possibility of a significant fraction of misses.

**EP 1 063 827 B1**

Table 2: Metrics for routing tables at five locations, 17 August 1998. Hit rate and miss rate for five minutes of destination IP addresses from fix-west around noon, 22 February 1997. The trace contains 2,146,573 IP datagrams.

| Site | Prefixes | Trace Statistics | |
|---|---|---|---|
| | | Hit Rate | Miss Rate |
| aads | 24325 | 37.63% | 62.37% |
| mae-east | 41123 | 95.68% | 4.32% |
| mae-west | 19260 | 69.43% | 30.57% |
| paix | 4241 | 6.33% | 93.67% |
| pb | 22830 | 30.83% | 69.17% |

Table 3 contains information for 100 bonsai where the prefixes are inserted in random order. For each metric, we show the minimum, average, and maximum values. Fairly consistent behavior for all the routers is noted, with the numbers for paix typically being somewhat smaller, due to the fact that it holds fewer prefixes. The bonsai have a typical depth of around 24, while the average level of a node is approximately 18 for the large tables. Also note that the average number of comparisons per search is much smaller for the uniform distribution than for the fix-west trace. This is because the uniform distribution assumes a large percentage of destination addresses in very sparse areas of the bonsai, where there are few possible matches. This phenomenon is discussed in more detail later in this section.

Metrics for the depth-optimal bonsai are listed in Table 4. In all cases the depth-optimal bonsai is more shallow than the best of the 100 random bonsai. The depth-optimal bonsai will also have the smallest average node level. Interestingly, the depth-optimal bonsai is worse than the average random bonsai in terms of comparisons per search. Intuitively, this occurs because the deep nodes, of the trie, while they can add to the depth, are less likely to be visited during a search than nodes higher up in the trie.

Table 5 contains data for the search-optimal bonsai. For this optimization, the depth and the average node level are worse than for the random bonsai, but we make real gains in terms of comparisons per search. Again, this indicates the tradeoff between depth and search time.

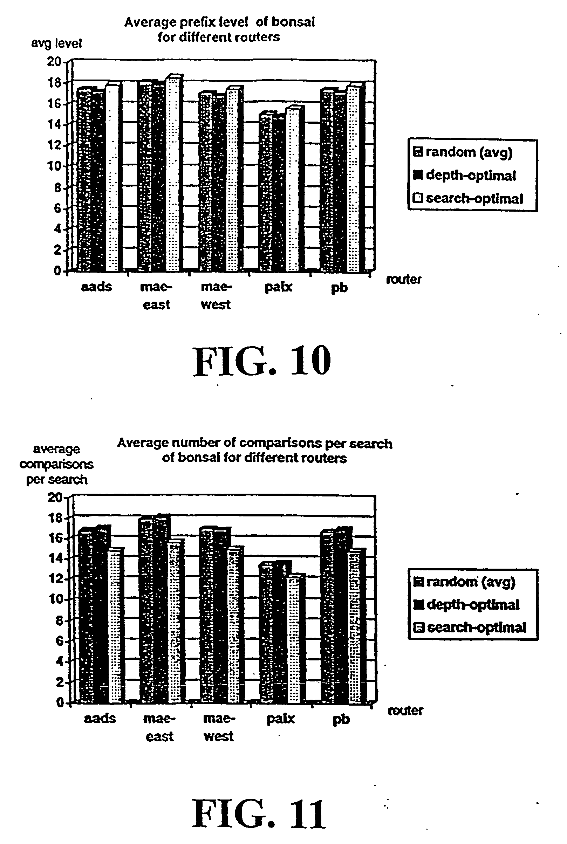

To facilitate direct comparisons between the different bonsai approaches, bar graphs for depth (FIG. 9), average node level (FIG. 10), and average comparisons per search for the fix-west trace (FIG. 11) are included. It is to be noted that the depth-optimal bonsai has modest but consistent advantages compared to other approaches for both depth and average node level: improvements in depth relative to random insertion range from 4% to 11%, while improvements in average node level range from 1% to 2%. It should also be noted that the search-optimal bonsai is worse than the average random bonsai for these metrics.

Table 3: Statistics for 100 bonsai for each location. Prefixes were inserted in random order.

| Site | Depth | | | Avg Level | | |
|---|---|---|---|---|---|---|
| | min | avg | max | min | avg | max |
| aads | 24 | 24.02 | 25 | 17.46 | 17.47 | 17.48 |
| mae-east | 24 | 24.05 | 25 | 18.17 | 18.18 | 18.18 |
| mae-west | 24 | 24.02 | 25 | 17.12 | 17.13 | 17.14 |
| paix | 23 | 23.53 | 24 | 15.10 | 15.13 | 15.15 |
| pb | 24 | 24.01 | 25 | 17.46 | 17.47 | 17.48 |
| | Avg Comps (Uni) | | | Avg Comps (Trace) | | |
| | min | avg | max | min | avg | max |
| aads | 7.05 | 7.08 | 7.10 | 16.53 | 16.86 | 17.17 |
| mae-east | 7.26 | 7.50 | 7.52 | 17.70 | 17.97 | 18.25 |
| mae-west | 7.09 | 7.12 | 7.15 | 16.63 | 17.02 | 17.37 |
| paix | 5.64 | 5.90 | 5.93 | 13.23 | 13.43 | 13.54 |
| pb | 6.98 | 7.04 | 7.05 | 16.54 | 16.73 | 17.04 |

Table 4: Statistics for depth-optimal bonsai for each location.

| Site | Depth | Avg Level | Avg Comps (Uniform) | Avg Comps (Trace) |
|------|-------|-----------|---------------------|-------------------|
| aads | 23 | 17.25 | 7.13 | 17.04 |
| mae-east | 23 | 17.98 | 7.56 | 18.11 |
| mae-west | 23 | 16.90 | 7.18 | 16.90 |
| paix | 21 | 14.88 | 5.95 | 13.53 |
| pb | 23 | 17.24 | 7.08 | 16.93 |

Table 5: Statistics for search-optimal bonsai (relative to the Trace distribution) for each location.

| Site | Depth | Avg Level | Avg Comps (Uniform) | Avg Comps (Trace) |
|------|-------|-----------|---------------------|-------------------|
| aads | 25 | 17.91 | 6.62 | 14.88 |
| mae-east | 25 | 18.58 | 7.30 | 15.66 |
| mae-west | 25 | 17.57 | 6.94 | 14.94 |
| paix | 25 | 15.68 | 5.52 | 12.27 |
| pb | 25 | 17.91 | 6.85 | 14.85 |

The data on the average number of comparisons per search, however, shows the advantages of the search-optimal bonsai. Improvements relative to the average random bonsai range from 9% to 13%. It should also be noted that the depth-optimal bonsai performs relatively poorly for this metric, though it does slightly outperform the random bonsai for the mae-west forwarding table.

In general the results suggest that random insertion of prefixes will provide reasonable performance for all the metrics considered.

There are several caveats related to the interpretation of these experimental results. For one thing, the trace is not taken from the routers that are examined but from a completely separate location. The extent to which the trace provides a realistic distribution is therefore debatable. However, when the effect on performance is considered, misses are not necessarily problematic, since even misses require a full bonsai search. In other words, misses are not necessarily performance outliers.

Another issue is that there are certain peculiarities related to the assignment of IP addresses that can affect performance. For example:

- The forwarding tables have no entries for either Class D IP addresses (which begin with "1110" and are used for multicast) or class E IP addresses (which begin with "11110" and are reserved for future use).

- The fix-west trace has no class E addresses, but 25,719 destination addresses are in class D (approximately 1.2%).

- The uniform distribution assumes Class D and Class E addresses are possible, with frequencies of approximately 6.3% and 3.1%, respectively.

Since the bonsai will contain no prefixes for Class D or Class E addresses, it will not have a node at or below locations "1110" and "11110". In fact, only Class D or E addresses can start with "111". Thus, Class D and E searches are faster than average-at most 3 levels of the bonsai will be searched. Similar effects can be seen in other areas of the address space: none of the forwarding tables contains a prefix that begins with "111" or "010", and each table contains only one prefix that begins with "011". (The entrie that begins with "011" is in all cases 127/255, which is reserved for loopback testing.)

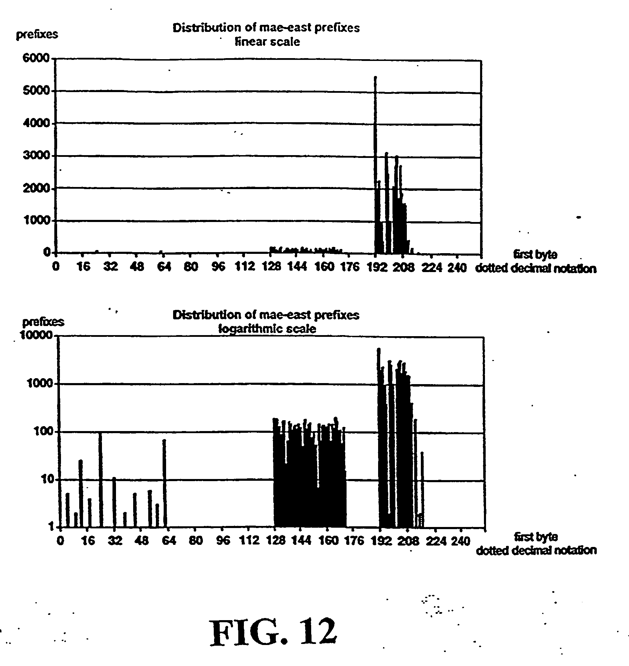

In light of the importance of prefix and IP destination address distributions, it is worthwhile examining real forwarding tables and real traces. FIG. 12 shows the distribution of prefixes from the mae-east forwarding table, based on the dotted decimal notation of the first byte of the prefix. Both linear and logarithmic scales are shown. The data shows that class C prefixes are far more common than others. There are very few Class A addresses, while the Class B addresses are fairly evenly distributed within a certain range. Again, these distributions have important consequences for trie-based approaches. The left side of a bonsai, for example, will be very sparsely populated in comparison to the right side. And similar arguments hold further down the trie.

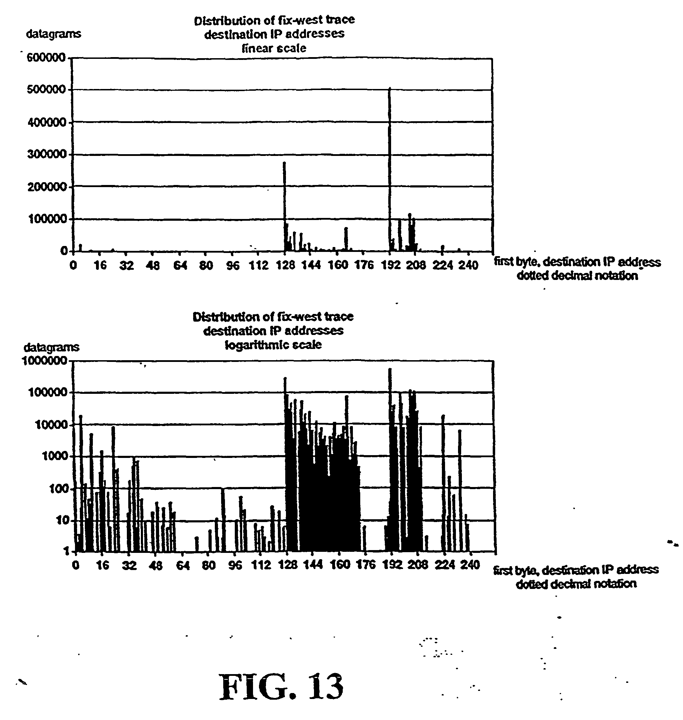

FIG. 13 shows the distribution for the first byte of the destination IP addresses for the fix-west trace. The data shows again that a uniform distribution is not a good model of the traffic. Traffic for Class B and Class C is far larger than for Class A. In fact, two bytes-128 and 192 in decimal notation-account for more that one third of all destination addresses.

**IVD. Pipeline Implementation**

Though the discussion so far has implicitly focused on a software implementation, the preferred embodiment bonsai also lends itself to dedicated hardware implementation. Throughput can be as high as one search per memory-access time. Inserts and deletes can be accomplished with no more than two clock cycle stalls in the pipeline. In this section, a preferred embodiment of pipeline implementation of bonsai is presented. It should be noted, the pipelining method is not restricted to bonsai. Many LMP search approaches can be pipelined in a similar manner. Gupta et al. provide one example-but for many of these approaches inserts and deletes are problematic. *See* P. Gupta, S. Lin, and N. McKeown, "Routing lookups in hardware at memory access speeds," in Proceedings IEEE INFOCOM'98, pp. 1240-1247, 1998.

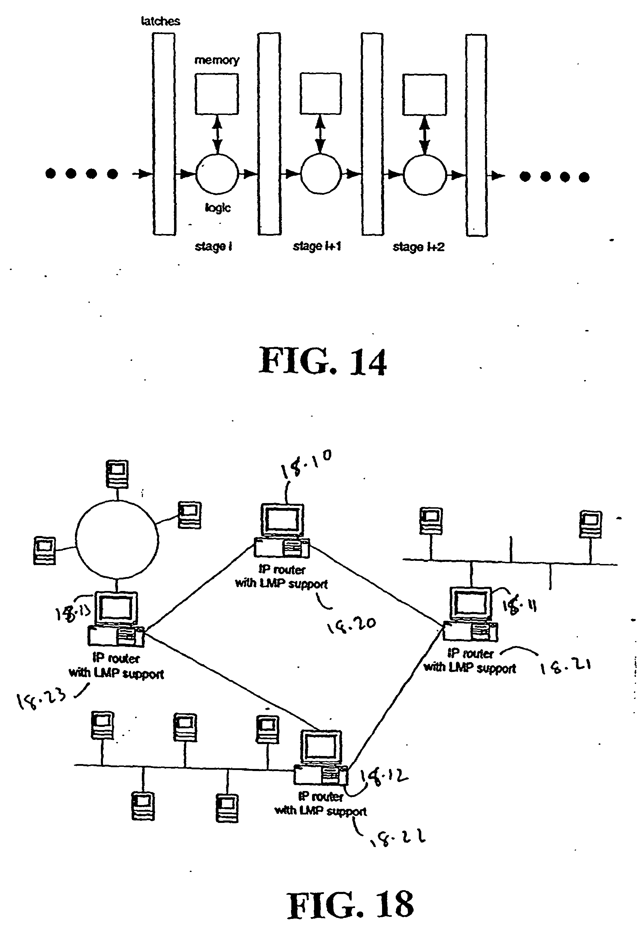

Consider FIG. 14, which shows a abstract pipeline for a bonsai. A pipeline stage consists of a memory component, some simple logic, and a bank of latches. The simplest implementation would handle one level of the bonsai at each stage, requiring d stages for a depth-d bonsai. (to reduce the number of stages it can be helpful to construct the depth-optimal bonsai.) At the input to stage 0, the destination IP address is sent for a search for the prefix for an insert or delete. Small instruction code to allow the pipeline to distinguish between searches, inserts, and deletes is also sent.

For the purposes of this discussion, assume the pipeline has one stage for each level of the bonsai. The data in level i of the bonsai will be stored in stage i of the pipeline. The latches before each stage will store the following information:

- A prefix, P, used as an input for inserts and deletes and an output for searches.

- A destination IP address, D, used as an input for searches.

- A pointer, R, which points to the appropriate node in the current level.

- An instruction, I, which indicates whether this stage of the pipeline is doing a search, an insert, or a delete.

- A state, S, which contains information about the state of the current instruction. For example, during a search one may need to know if an previous matches have been found, or during a delete one may be promoting prefixes at this point rather than deleting.

The basic hardware for each stage of the pipeline will include the following:

- Latches that hold relevant input and output information, as described above.
- Memory that contains information on the nodes of the level. Nodes are of fixed size, and contain a prefix and two pointers. When writing to a node, it is possible to write just to a node's prefix or to one of its two child pointers.
- A stack (or some other structure) that contains pointers to unused node addresses in the subsequent stage. For example, during an insert, some node will need to allocate memory for a child. Similarly, during a delete, some node will have to deallocate memory for a child. Memory management is quite simple due to the fixed size of the nodes.
- Comparitors, for example to check prefix matches or compare prefix lengths.
- A variety of more basic building blocks, such as multiplexers and logic gates.

It is to be noted that although subsequent instructions in the pipeline are independent, it will be necessary to stall the pipeline in some cases. These can occur only during inserts or deletes, however, and will never cause more than 2 clock cycle stalls.

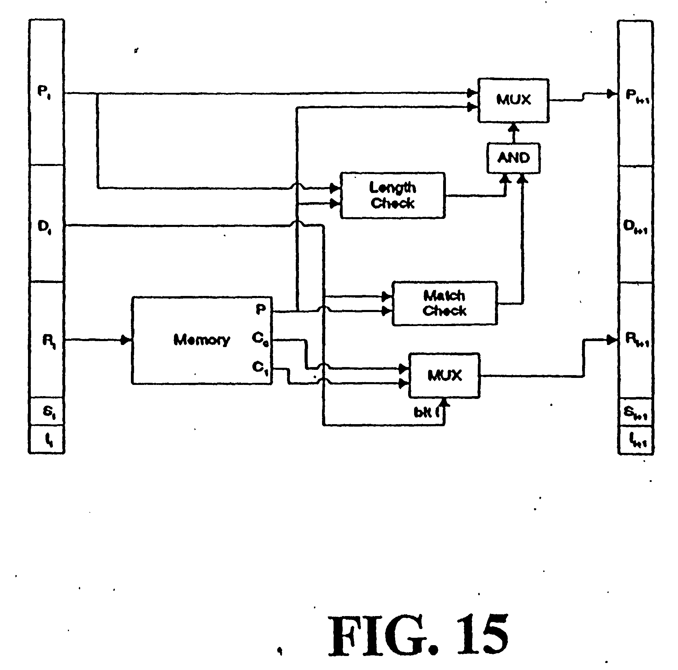

Though an exhaustive description of the pipeline design is inappropriate here, the hardware required for some specific cases is examined, to provide a feel for the design requirements. FIG. 15 shows a detailed example of potential operation during a search. At this point, assume that the relevant node at stage i exists, and that another relevant node exists at stage i + 1. It is checked to see if the destination IP address matches the prefix in stage i. If the prefix does match, and if it is longer than any earlier matches, it will be passed along to the next stage, along with the appropriate pointer for the next node.

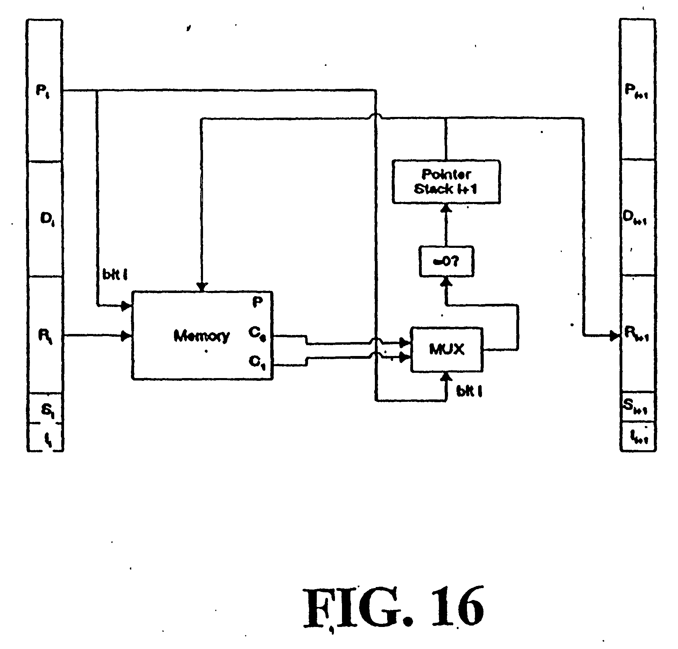

The simple case for an insert occurs when an inserted prefix falls into the first empty node. This can be accomplished with a single stall in the pipeline, which is required to write a new pointer into the parent of the new leaf node. FIG. 16 shows this case. First, the memory is read, and it is found that there is no appropriate child node. A pointer is allocated at the pointer stack for the new node. This pointer is written back into the memory (during the second clock cycle), and it is also passed on to the subsequent stage, along with the prefix to be inserted. Another case occurs when an insert causes another prefix to be dislodged, If a prefix is dislodged in stage i, this will require two memory accesses at stage i: a read of the prefix to be dislodged, followed by a write of the prefix to be inserted. This can be accomplished with one stall of the pipeline. Note that even if more prefixes are dislodged for this insert further down the pipeline, no more stalls will be necessary.

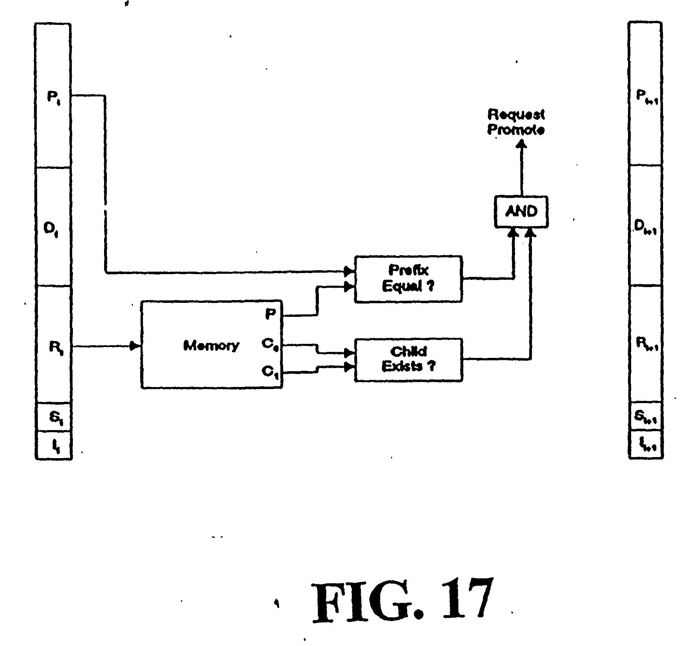

Deletes are more difficult since a deleted prefix in level i will require a pointer update in level i - 1, which will require bypass hardware between stages. Level i can be read during clock cycle j. Level i - 1 can be written during clock cycle j + 1 (note that the pointer to the parent node must have been saved in the latches). In general, the children of the deleted prefix need also to be promoted. Stage i + 1 can be read in clock cycle j + 1, and written back to stage i during clock cycle j + 2. The beginning of this action is shown in FIG. 17. It is found that there is no match in stage i. It should be noted that a child exists, so a prefix needs to be promoted. The bypass hardware needed for the write-back is not shown for clarity. In the worst case, deletes will force two clock cycles of stall.

One difficulty with this design is the imbalance in the number of nodes per bonsai level, which corresponds to an imbalance in the memory sizes needed by the pipeline stages. FIG.1 shows, for example, that some levels have no nodes while others have thousands. It should be fairly easy to split one level of a bonsai over several contiguous pipeline stages when the memory requirements of a single stage are insufficient, but it is still the case that the levels near the root will only require a very limited amount of memory.

### IVE. A Network System using Bonsai

FIG. 18 shows an implementation of a preferred embodiment of a network system according to the present invention. This network system comprises a plurality of hosts 18.10-18.13. Each host has routers 18.20-18.23 associated with it. Prefixes of addresses are stored in the routers using bonsai tries. Bonsai tries, as noted above, are implementations of binary tries wherein prefixes related to addresses are stored such that each node in the bonsai trie has a prefix stored and no node is empty.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the scope of the invention.

### Claims

1. A method of converting a trie with stored addresses into a depth-optimal subtrie that has all nodes representing addresses, said method comprising:

    a) finding a lowest level of said trie that has a full node and designating said lowest level as i, wherein i is an integer;
    b) examining each node at a level corresponding to i-1;
    c) moving up a prefix if there is an empty node at level i-1 from the bottom of the deeper subtrie of the empty node; and
    d) continuing said merging until the root node is reached.

2. The method of claim 1 wherein said addresses are Internet addresses and said trie is located in an IP router.

### Patentansprüche

1. Verfahren zum Umwandeln eines Trie mit gespeicherten Adressen in einen tiefenoptimierten Subtrie, in dem alle Knoten Adressen darstellen, wobei das Verfahren die Schritte aufweist:

    a) Finden einer untersten Ebene des Trie, die einen vollen Knoten aufweist, und Spezifizieren der untersten Ebene durch i, wobei i eine ganze Zahl ist;
    b) Untersuchen jedes Knotens auf einer Ebene i-1;
    c) Verschieben eines Präfix nach oben, wenn auf der Ebene i-1 ein leerer Knoten vorhanden ist, vom Boden des tieferen Subtries des leeren Knotens; und
    d) Fortsetzen der Vereinigung, bis der Wurzelknoten erreicht ist.

2. Verfahren nach Anspruch 1, wobei die Adressen Internetadressen sind und der Trie in einem IP-Router angeordnet ist.

**Revendications**

1. Procédé de conversion d'une arborescence avec des adresses stockées en une sous-arborescence de profondeur optimale dont tous les noeuds représentent des adresses, ledit procédé comprenant les étapes consistant à :

   a) trouver le plus bas niveau de ladite arborescence qui a un noeud complet et désigner ledit plus bas niveau en tant que i, où i est un nombre entier ;
   b) examiner chaque noeud à un niveau correspondant à i-1 ;
   c) faire monter un préfixe s'il y a un noeud vide au niveau i-1 du bas de la sous-arborescence plus profonde du noeud vide ; et
   d) poursuivre ladite fusion jusqu'à atteindre le noeud de racine.

2. Procédé selon la revendication 1 dans lequel lesdites adresses sont des adresses Internet et ladite arborescence est située dans un routeur IP.

Prefixes in trie for mae-east
(41,123 prefixes)

Nodes in trie for mae-east
(132,104 nodes)

Depth-optimal bonsai for mae-east
(41,123 prefixes)

# FIG. 1

FIG. 2

FIG. 3

**FIG. 4**

**FIG. 7**

**FIG. 5**

**FIG. 6**

root
expectation
array

subtrie
root
node

left
probability

right
probability

left
expectation
array

right
expectation
array

right subtrie

left subtrie

# FIG. 8

**Depth of bonsai for different routers**

depth

25

20

15

10

5

0

aads    mae-    mae-    paix    pb
        east    west

router

☒ random (avg)
■ depth-optimal
☐ search-optimal

# FIG. 9

Average prefix level of bonsai
for different routers

avg level

☒ random (avg)
■ depth-optimal
☐ search-optimal

router

aads    mae-    mae-    palx    pb
         east    west

# FIG. 10

average
comparisons
per search

Average number of comparisons per search
of bonsai for different routers

☒ random (avg)
■ depth-optimal
☐ search-optimal

router

aads    mae-    mae-    palx    pb
         east    west

# FIG. 11

FIG. 12

FIG. 13

**FIG. 14**

**FIG. 18**

EP 1 063 827 B1

# FIG. 15

# FIG. 16

EP 1 063 827 B1

EP 1 063 827 B1

Request
Promote

AND

Prefix
Equal ?

Child
Exists ?

Memory

P

C₀

C₁

P₁

D₁

R₁

S₁

I₁

P_{h+1}

D_{h+1}

R_{h+1}

S_{h+1}

I_{h+1}

# FIG. 17

**FIG. 19**

**Prior Art**

Prefixes

00
010
0100
1
10
1001

trie

(0)

(01000)

(010010)    (010011)

(1)

Patricia trie

# FIG. 20

# Prior Art